# EUROPEAN PATENT APPLICATION

(11) **EP 4 610 077 A1**
(43) Date of publication of application: **03.09.2025**
(21) Application number: 23894013.4
(22) Date of filing: 24.11.2023
(51) Int. Cl.: B60J 1/00, C03C 27/12

(54) **LAMINATED GLASS FOR VEHICLE AND APPLICATION THEREOF**

(30) Priority: 24.11.2022 CN 202211479714
(71) Applicant: Fuyao Glass Industry Group Co., Ltd., Fuqing, Fujian 350300 (CN)
(72) Inventor: HONG, Jinquan, Fuqing, Fujian 350300 (CN); LI, Weijun, Fuqing, Fujian 350300 (CN); GUAN, Jinliang, Fuqing, Fujian 350300 (CN)
(74) Representative: Patentanwälte Olbricht Buchhold Keulertz
(86) International application number: PCT/CN2023/133937
(87) International publication number: WO 2024/109924

(57) **Abstract**

Laminated glass for a vehicle and an application thereof. The laminated glass for a vehicle comprises an outer sheet of glass, an inner sheet of glass and an intermediate film. The outer sheet of glass has a first surface facing a vehicle exterior and a second surface facing a vehicle interior. The inner sheet of glass has a third surface facing the vehicle exterior and a fourth surface facing the vehicle interior. The intermediate film joins the second surface and the third surface. There is an infrared reflective coating between the outer sheet of glass and the inner sheet of glass. A low-radiation coating is disposed on the fourth surface. A mirror index α of the laminated glass for a vehicle is less than or equal to 15, and the mirror index α is calculated according to the formula α=RL/TL², wherein RL is the visible light reflectance of the laminated glass for a vehicle measured from the vehicle interior side, and TL is the visible light transmittance of the laminated glass for a vehicle. When the laminated glass for a vehicle is used as sunroof glass of a vehicle roof, same can meet the usage requirements for omitting sunshades, and can effectively improve a mirror reflection effect of vehicle interior surfaces, thereby improving the user experience and protecting passenger privacy.

## Description

The present application claims the priority of the Chinese patent application No. 202211479714.6 entitled "Laminated Glass for Vehicle and Use thereof", filed with the China National Intellectual Property Administration on November 24, 2022, the entire contents of which are incorporated by reference.

### Technical field

The disclosure relates to laminated glass for a vehicle and use thereof, and belongs to the technical field of vehicle glass.

### Background of Art

With regard to the prior art, the panoramic skylight glass for automobiles without shade screens as used in US20040219368A1, CN101400515A and the like generally achieves heat insulation and heat preservation functions by a heat-reflecting metal coating and/or a heat-absorbing intermediate film and/or a low-emissivity coating, and the heat-absorbing intermediate film used therein generally has a low visible light transmittance, thereby preventing sunlight from entering the cabin through the roof and causing adverse consequences such as glare and dizziness.

Meanwhile, since the laminated glass for a vehicle generally has no shade screens and its visible light reflectance is generally more than 8%, the passengers and objects in the vehicle (such as the center console display or the display of other electronic equipment) will form obvious reflections on the sunroof glass due to mirror reflection, causing visual interference to the passengers, especially the rear-seat passengers, and making eyes uncomfortable, when it is used as the sunroof glass on the roof of a vehicle. Moreover, as the size of sunroof glass becomes larger and the visible light transmittance becomes lower, for example, the reflections on the panoramic sunroof glass or panoramic skylight glass on electric vehicles become clearer. If the passengers in the vehicle use electronic devices such as mobile phones, the contents of the electronic devices may be clearly displayed on the sunroof glass and seen by other passengers, thereby causing privacy disclosure.

Therefore, in order to improve the mirror reflection without shade screens, it is an urgent technical problem to be solved in the art to provide laminated glass for a vehicle and use thereof.

### Summary of the Invention

In order to realize improved mirror reflection in the absence of a shade screen, one object of the disclosure is to provide laminated glass for a vehicle.

Another object of the disclosure is to provide use of the laminated glass for a vehicle as sunroof glass, side window glass or rear windshield glass of a vehicle.

In order to achieve the above objectives, on the one hand, the disclosure provides laminated glass for a vehicle, comprising an outer glass pane, an inner glass pane, and an intermediate film, wherein the outer glass pane has a first surface facing the outside of the vehicle and a second surface facing the inside of the vehicle, the inner glass pane has a third surface facing the outside of the vehicle and a fourth surface facing the inside of the vehicle, the intermediate film bonds the second surface and the third surface, an infrared reflective coating is provided between the outer glass pane and the inner glass pane, and a low-emissivity coating is provided on the fourth surface;
the laminated glass for a vehicle has a mirror index α of less than or equal to 15, the mirror index α is calculated according to the equation α=RL/TL², where RL is the visible light reflectance of the laminated glass for a vehicle measured from the inside of the vehicle, and TL is the visible light transmittance of the laminated glass for a vehicle. Herein, the mirror index α may be specifically 3, 4, 5, 6, 7, 8, 9, 10, 11, 12, 13, 14, 15, or the like.

In a specific embodiment of the laminated glass for a vehicle according to the disclosure, the laminated glass for a vehicle has a mirror index α of 3-10.

In a specific embodiment of the laminated glass for a vehicle according to the disclosure, an edge region of the second surface is covered with a first dark masking layer, and/or an edge region of the third surface or the fourth surface is covered with a second dark masking layer; the width of the second dark masking layer is greater than the width of the first dark masking layer.

In a specific embodiment of the laminated glass for a vehicle according to the disclosure, each of the first dark masking layer and the second dark masking layer has a thickness in the range of 10 µm to 22 µm, preferably 10 µm to 15 µm.

In the disclosure, the width of the second dark masking layer is greater than the width of the first dark masking layer, which can prevent the print border from being seen from the inside of the vehicle. In a specific embodiment of the laminated glass for a vehicle according to the disclosure, the difference between the width of the second dark masking layer and the width of the first dark masking layer is 3 µm to 10 µm, preferably 5 µm.

In some embodiments of the disclosure, the first dark masking layer and the second dark masking layer may be of black ceramic ink, which is an existing conventional material and can be purchased commercially, and contains a glass material (with a content of greater than 60 wt%), a colorant, and the like.

In some embodiments of the disclosure, each of the first dark masking layer and the second dark masking layer can be produced by screen printing or inkjet printing.

In a specific embodiment of the laminated glass for a vehicle according to the disclosure, the outer glass pane is transparent glass having a visible light transmittance of greater than or equal to 80% and a thickness of 1.8 mm to 4.2 mm.

In a specific embodiment of the laminated glass for a vehicle according to the disclosure, the inner glass pane is transparent glass or green glass having a visible light transmittance of greater than or equal to 80% and a thickness of 0.7 mm to 2.1 mm.

In a specific embodiment of the laminated glass for a vehicle according to the disclosure, the inner glass pane provided with the low-emissivity coating has a visible light transmittance of 50% to 70%.

In a specific embodiment of the laminated glass for a vehicle according to the disclosure, the inner glass pane provided with the low-emissivity coating has a mirror index α1 of less than or equal to 0.1, the mirror index α1 is calculated according to the equation α1=RLᵢₙₙₑᵣ/TLᵢₙₙₑᵣ², where RLᵢₙₙₑᵣ is the visible light reflectance of the inner glass pane provided with the low-emissivity coating measured from the side close to the low-emissivity coating, and TLᵢₙₙₑᵣ is the visible light transmittance of the inner glass pane provided with the low-emissivity coating. Herein, the mirror index α1 may be specifically 0.05, 0.06, 0.07, 0.08, 0.09, 0.1, or the like.

In a specific embodiment of the laminated glass for a vehicle according to the disclosure, the intermediate film has a visible light transmittance of 1% to 20%, preferably 2% to 10%.

More preferably, the intermediate film is a colored thermoplastic polymer film comprising PVB, EVA, SGP or PU.

The disclosure has no specific requirement on the thickness of the intermediate film, and it can be reasonably adjusted according to the actual situation on site. For example, in some embodiments of the disclosure, the thickness of the intermediate film may generally be 0.38 mm to 1.63 mm, preferably 0.76 mm to 1.25 mm.

In a specific embodiment of the laminated glass for a vehicle according to the disclosure, the infrared reflective coating comprises at least one metal layer and at least two first medium layers, and each metal layer is located between two adjacent first medium layers.

The disclosure has no specific requirement on the thickness of the infrared reflective coating, and it can be reasonably adjusted according to the actual situation on site. For example, in some embodiments of the disclosure, the thickness of the infrared reflective coating may be 100 nm to 500 nm.

In the disclosure, when the edge region of the second surface of the outer glass pane is covered with the first dark masking layer, the infrared reflective coating is provided between the first dark masking layer and the intermediate film.

In a specific embodiment of the laminated glass for a vehicle according to the disclosure, the low-emissivity coating comprises at least one transparent conductive oxide layer and at least two second medium layers, and each transparent conductive oxide layer is located between two adjacent second medium layers.

In a specific embodiment of the laminated glass for a vehicle according to the disclosure, the low-emissivity coating further comprises at least one visible light blocking layer, and the visible light blocking layer is in direct contact with the transparent conductive oxide layer.

The disclosure has no specific requirement on the thickness of the low-emissivity coating, and it can be reasonably adjusted according to the actual situation on site. For example, in some embodiments of the disclosure, the thickness of the low-emissivity coating may be 100 nm to 500 nm.

In a specific embodiment of the laminated glass for a vehicle according to the disclosure, the low-emissivity coating has an emissivity of less than or equal to 0.25 and a surface resistance of less than or equal to 23 ohm/m², and the reflection color of the inner glass pane provided with the low-emissivity coating is -10≤a≤ 2 and -5≤b≤ 5 according to Lab, as measured from the side close to the low-emissivity coating.

In a specific embodiment of the laminated glass for a vehicle according to the disclosure, the visible light transmittance TL of the laminated glass for a vehicle is 0.5% to 10%, the visible light reflectance RL of the laminated glass for a vehicle is less than or equal to 6%, preferably less than or equal to 4%, more preferably less than or equal to 2%, even more preferably less than or equal to 1% as measured from the inside of the vehicle, and the total solar energy transmittance of the laminated glass for a vehicle is less than or equal to 20%.

On the other hand, the disclosure also provides use of the laminated glass for a vehicle as sunroof glass, side window glass or rear windshield glass of a vehicle.

In a specific embodiment of the use according to the disclosure, the vehicle may be for example a car or the like.

When the laminated glass for a vehicle provided by the disclosure is used as roof glass, i.e., sunroof glass of the vehicle, it is possible to avoid using sunshade devices such as shade screens or shade cloths; it can also reduce or even eliminate obvious reflections of passengers and objects in the vehicle on the sunroof glass due to mirror reflection, avoid visual interference to passengers, especially rear-seat passengers, effectively improve the mirror reflection effect of the interior of the vehicle, enhance user experience and protect passenger privacy.

### Brief Description of Drawings

In order to more clearly illustrate the technical solutions of Examples of the disclosure or the prior art, the drawings used in the description of Examples will be briefly introduced below. Obviously, the drawings described below are some embodiments of the disclosure. For one skilled in the art, other drawings can be obtained on the basis of these drawings without inventive work.

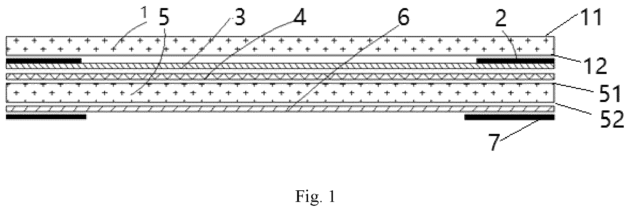

Fig. 1 is a schematic diagram of the structure of laminated glass for a vehicle provided in Examples of the disclosure.

Explanation of main reference numerals:
- 1.: Outer glass pane;
- 11.: First surface;
- 12.: Second surface;
- 2.: First dark masking layer;
- 3.: Infrared reflective coating;
- 4.: Intermediate film;
- 5.: Inner glass pane;
- 51.: Third surface;
- 52.: Fourth surface;
- 6.: Low-emissivity coating;
- 7.: Second dark masking layer.

### Detailed Description of Embodiments

It should be noted that the term "comprise" and any variations thereof in the description, claims and drawings of the disclosure are intended to cover non-exclusive inclusion, for example, a process, method, system, product, apparatus or composition comprising a series of steps, units or components is not necessarily limited to those steps, units or components explicitly listed, but may include other steps, units or components that are not explicitly listed or are inherent to such process, method, product, apparatus or composition.

The range disclosed in the disclosure is given in the form of a lower limit and an upper limit. There can be one or more lower limits, and one or more upper limits, respectively. The given range is defined by selecting a lower limit and an upper limit. The selected lower limit and upper limit define the boundary of a particular range. All ranges defined as such are combinable, that is, any lower limit can be combined with any upper limit to form a range. For example, where ranges of 60-120 and 80-110 are listed for a particular parameter, it is understood that the ranges of 60-110 and 80-120 are also contemplated. Furthermore, if the listed minimum values of the range are 1 and 2, and the listed maximum values of the range are 3, 4, and 5, then the following ranges are all contemplated: 1-3, 1-4, 1-5, 2-3, 2-4, and 2-5.

In the disclosure, the numerical range "a-b" represents an abbreviation for any combination of real numbers between a and b, wherein a and b are both real numbers, unless specified otherwise. For example, the numerical range "0-5" means that all real numbers among "0-5" have been listed in the disclosure, and "0-5" is just an abbreviation of these numerical combinations.

In the disclosure, all embodiments and preferable embodiments mentioned in the disclosure can be combined with each other to form a new technical solution, unless specified otherwise.

In the disclosure, all technical features and preferable features mentioned in the disclosure can be combined with each other to form a new technical solution, unless specified otherwise.

In order to make the object, technical solutions and advantages of the disclosure clearer, the disclosure will be further described in detail below in conjunction with tables, drawings and examples. The examples described below are part of examples of the disclosure, not exhaustive, and are only used to illustrate the disclosure, and should not be considered as limiting the scope of the disclosure. All other examples obtained by those skilled in the art on the basis of examples in the disclosure without inventive work are within the protection scope of the present disclosure. If no specific conditions are specified in the examples, it is carried out according to conventional conditions or conditions recommended by the manufacturer. If the manufacturer is not specified for the used reagents or instruments, they are all conventional products that are commercially available.

In the disclosure, the infrared reflective coating 3 is capable of reflecting infrared rays from sunlight, thus reducing the total solar energy transmittance of the laminated glass for a vehicle. The infrared reflective coating 3 is provided between the outer glass pane 1 and the inner glass pane 5. Specifically, it may be provided on the second surface 12 of the outer glass pane 1, or on the third surface 51 of the inner glass pane 5, or on a thermoplastic coating such as PET, while the thermoplastic coating provided with the infrared reflective coating 3 is sandwiched between the second surface 12 and the third surface 51.

Herein, the infrared reflective coating 3 comprises at least one metal layer and at least two first medium layers, and each metal layer is located between two adjacent first medium layers. The material of the metal layer may be selected from metals such as silver (Ag), gold (Au), copper (Cu), aluminum (Al), or platinum (Pt), or metal alloys. In the disclosure, silver metal or silver alloy is preferable, wherein the silver alloy is preferably an alloy of silver and at least one of gold, aluminum, copper, and platinum. According to the needs of practical applications, the number of metal layers in the infrared reflective coating 3 may be for example two, three, four, five or even more. Taking silver metal or silver alloy as an example, there may be double silver infrared reflective coating, triple silver infrared reflective coating, quadruple silver infrared reflective coating, quintuple silver infrared reflective coating, and the like. The material of the first medium layer may be at least one selected from oxides of Zn, Mg, Sn, Ti, Nb, Zr, Ni, In, Al, Ce, W, Mo, Sb, and Bi elements, or nitrides and oxynitrides of Si, Al, Zr, Y, Ce, and La elements and mixtures thereof, such as zinc stannate, magnesium-doped zinc stannate, zinc oxide, magnesium-doped zinc oxide, zirconium-doped zinc oxide, niobium oxide, bismuth oxide, aluminum-doped zinc oxide, zirconium oxide, titanium oxide, and titanium peroxide.

Herein, the metal layer and the first medium layer can be formed by a magnetron sputtering process respectively, and the thickness of each metal layer is 4 nm to 20 nm. By optimizing the material and thickness of the metal layer and the first medium layer, the infrared reflective coating 3 can withstand subsequent high-temperature heat treatment or other bending molding processes, and the optical properties and mechanical properties of the obtained laminated glass for a vehicle can meet the use standards of vehicle glass.

In the disclosure, the low-emissivity coating 6 is provided on the fourth surface 52 of the inner glass pane 5 to reduce the emissivity of the laminated glass for a vehicle. Preferably, the low-emissivity coating 6 has an emissivity of ≤0.25, more preferably ≤0.20. The low-emissivity coating 6 comprises at least one transparent conductive oxide (TCO) layer, wherein the material of the transparent conductive oxide layer may be at least one selected from doped zinc oxide, indium tin oxide (ITO), and fluorine-doped tin dioxide (FTO); the doped zinc oxide is zinc oxide doped with one or more of elements such as aluminum, tungsten, hafnium, gallium, yttrium, niobium, and neodymium, and specifically can be at least one of aluminum-doped zinc oxide (AZO), yttrium-doped zinc oxide (YZO), hafnium- and aluminum-doped zinc oxide (HAZO), tungsten- and aluminum-doped zinc oxide (W-AZO), and gallium-doped zinc oxide (GZO).

Herein, the total thickness of the transparent conductive oxide layers in the low-emissivity coating 6 is 50 nm to 300 nm, and the low-emissivity coating 6 further comprises at least two second medium layers, with each transparent conductive oxide layer being located between two adjacent second medium layers. The transparent conductive oxide layer and the second medium layer can be formed by a magnetron sputtering process respectively. By optimizing the material and thickness of the transparent conductive oxide layer and the second medium layer, the low-emissivity coating 6 can withstand subsequent high-temperature heat treatment or other bending molding processes, and the optical properties and mechanical properties of the obtained laminated glass for a vehicle can meet the use standards of vehicle glass. In addition, an antireflection effect of the low-emissivity coating 6 can be realized. It can reduce or even eliminate the obvious reflections of passengers and objects in the vehicle on the sunroof glass due to mirror reflection, avoid visual interference to passengers, especially rear-seat passengers, and improve the user experience. Optionally, the material of the second medium layer is selected from nitrides, oxides, and oxynitrides of at least one element of Zn, Sn, Ti, Si, Al, Mg, and Zr.

In addition, the low-emissivity coating 6 further comprises at least one visible light blocking layer. The visible light blocking layer has a thickness of 4 nm to 20 nm, and is at least one selected from nickel-chromium alloy (NiCr), nickel-aluminum alloy (NiAl), nickel-silicon alloy (NiSi), metal chromium (Cr), titanium nitride (TiN), niobium nitride (NbN), and titanium-molybdenum alloy (MoTi). By adding the visible light blocking layer in the low-emissivity coating 6, the inner glass pane 5 can be selected from transparent glass or green glass having a visible light transmittance of ≥80%, so as to realize the laminated glass for a vehicle with a mirror index α of less than or equal to 15, which is advantageous for reducing or even eliminating the obvious reflections of passengers and objects in the vehicle on the sunroof glass due to mirror reflection, avoiding visual interference to passengers, especially rear-seat passengers, and improving the user experience.

### Examples 1 to 3 and Comparative Examples 1 to 3

### Example 1

This example provides laminated glass for a vehicle, and the schematic diagram of the structure thereof is shown in Fig. 1. It can be seen from Fig. 1 that the laminated glass for a vehicle comprises an outer glass pane 1, an inner glass pane 5, and an intermediate film 4, wherein the outer glass pane has a first surface 11 facing the outside of the vehicle and a second surface 12 facing the inside of the vehicle; the inner glass pane 5 has a third surface 51 facing the outside of the vehicle and a fourth surface 52 facing the inside of the vehicle; the intermediate film 4 bonds the outer glass pane 1 and the inner glass pane 5; an infrared reflective coating 3 is provided on the second surface 12 of the outer glass pane 1; and a low-emissivity coating 6 is provided on the fourth surface of the inner glass pane 5.

An edge region of the second surface 12 of the outer glass pane 1 is covered with a first dark masking layer 2, an edge region of the fourth surface 52 of the inner glass pane 5 is covered with a second dark masking layer 7, and the width of the second dark masking layer 7 is greater than the width of the first dark masking layer 2; the material of the first dark masking layer 2 and the second dark masking layer 7 is a black ceramic ink. The first dark masking layer 2 can be directly printed on the second surface 12 by a process such as screen printing, or directly printed on the infrared reflective coating 3. The second dark masking layer 7 can be directly printed on the fourth surface 52 by a process such as screen printing, or directly printed on the low-emissivity coating 6.

In this example, the outer glass pane 1 is transparent glass having a thickness of 2.1 mm and a visible light transmittance of 88%; the inner glass pane 5 is transparent glass having a thickness of 2.1 mm and a visible light transmittance of 88%; and the intermediate film 4 is gray PVB having a visible light transmittance of 8%.

The infrared reflective coating 3 is double silver infrared reflective coating, and specifically includes transparent glass/SiO₂ (15 nm)/ZnSnOx (32 nm)/AZO (9 nm)/Ag (9.6 nm)/AZO (12.3 nm)/ZnSnOx (46.3 nm)/AZO (12 nm)/Ag (11.8 nm)/AZO (11 nm)/ZnSnOx (25 nm)/Si₃N₄ (11 nm), where Ag is the metal layer and the others are the first medium layers.

The low-emissivity coating 6 includes a visible light blocking layer, and specifically includes transparent glass/Si₃N₄ (5 nm)/ITO (160 nm)/NiCr (4 nm)/Si₃N₄ (23 nm)/SiO₂ (60 nm)/Si₃N₄ (5 nm), where ITO is the transparent conductive oxide layer, NiCr is the visible light blocking layer, and the others are the second medium layers.

### Example 2

This example provides laminated glass for a vehicle, which is different from the laminated glass for a vehicle provided in Example 1 in only that:
the low-emissivity coating 6 does not includes a visible light blocking layer, and specifically includes transparent glass/Si₃N₄ (5 nm)/ITO (118 nm)/Si₃N₄ (8 nm)/SiO₂ (180 nm), where ITO is the transparent conductive oxide layer, and the others are the second medium layers.

### Example 3

This example provides laminated glass for a vehicle, which is different from the laminated glass for a vehicle provided in Example 1 in only that:
the intermediate film 4 is gray PVB having a visible light transmittance of 5%.

### Comparative Example 1

This comparative example provides laminated glass for a vehicle, which is different from the laminated glass for a vehicle provided in Example 1 in only that:
The fourth surface 52 of the inner glass pane 5 is not provided with a low-emissivity coating 6.

### Comparative Example 2

This comparative example provides laminated glass for a vehicle, which is different from the laminated glass for a vehicle provided in Example 1 in only that:
the second surface 12 of the outer glass pane 1 is not provided with an infrared reflective coating 3; the outer glass pane 1 is gray glass having a thickness of 2.1 mm and a visible light transmittance of 40%; the inner glass pane 5 is gray glass having a thickness of 2.1 mm and a visible light transmittance of 40%; and the intermediate film 4 is gray PVB having a visible light transmittance of 18%.

### Comparative Example 3

This comparative example provides laminated glass for a vehicle, which is different from the laminated glass for a vehicle provided in Example 1 in only that:
the low-emissivity coating 6 is a single FTO layer, which is formed by a floatation online chemical vapor deposition (CVD) process.

### Performance Testing Example 1

The laminated glass for a vehicle provided in Examples 1 to 3 and the laminated glass for a vehicle provided in Comparative Examples 1 to 3 were obtained according to a process for producing vehicle glass, and then subjected to tests such as visible light transmittance (TL), visible light reflectance (RL), and total solar energy transmittance (TTS) respectively, and the mirror index (α) was calculated. The relevant testing results and calculation results are shown in Table 1.

Visible light transmittance (TL): visible light transmittance in the wavelength range of 380 nm to 780 nm of the laminated glass for a vehicle as measured and calculated according to ISO9050.

Visible light reflectance (RL): visible light reflectance in the wavelength range of 380 nm to 780 nm of the laminated glass for a vehicle as measured and calculated from the inside of the vehicle according to ISO9050.

Total solar energy transmittance (TTS): total solar energy transmittance in the wavelength range of 300 nm to 2500 nm of the laminated glass for a vehicle as measured and calculated according to ISO9050.

Mirror index (α): calculated according to the equation α=RL/TL².

**Table 1: Testing results and calculation results of Examples 1 to 3 and Comparative Examples 1 to 3**

| | Visible light transmittance TL | Visible light reflectance RL | Mirror index α | Total solar energy transmittance TTS |
|---|---|---|---|---|
| Example 1 | 5.17% | 1.05% | 3.93 | 17.30% |
| Example 2 | 7.44% | 2.82% | 5.09 | 18.56% |
| Example 3 | 3.13% | 0.95% | 9.70 | 14.62% |
| Comparative Example 1 | 4.47% | 4.08% | 20.42 | 21.51% |
| Comparative Example 2 | 2.53% | 1.16% | 18.12 | 20.57% |
| Comparative Example 3 | 7.76% | 8.27% | 13.73 | 14.90% |

It can be seen from Table 1 above that the laminated glass for a vehicle provided in Examples 1 to 3 of the disclosure has a visible light transmittance TL of 0.5% to 10%, a visible light reflectance of ≤3%, a mirror index of 3 to 10, and a total solar energy transmittance of ≤20%. It shows that as compared with the laminated glass for a vehicle provided in Comparative Examples 1 to 3, when the laminated glass for a vehicle provided in Examples 1 to 3 is used as sunroof glass of the vehicle, it is possible to meet the use demand of canceling shade screens, and it can reduce or even eliminate obvious reflections of passengers and objects in the vehicle on the sunroof glass due to mirror reflection, avoid visual interference to passengers, especially rear-seat passengers, effectively improve the mirror reflection effect of the interior of the vehicle, enhance user experience and protect passenger privacy.

Since the laminated glass for a vehicle provided in Comparative Example 1 is not provided with a low-emissivity coating 6, its emissivity is about 0.9, and it does not have the effect of heat insulation in summer and heat preservation in winter. Not only its total solar energy transmittance is greater than 20%, but its mirror index is also greater than 15. the laminated glass for a vehicle provided in Comparative Example 1 does not have low-emissivity performance, but has poor heat insulation effect and strong mirror reflection, and cannot meet the use demand of canceling shade screens, as compared with that of Examples 1 to 3.

Since the laminated glass for a vehicle provided in Comparative Example 2 is not provided with an infrared reflective coating 3, two sheets of gray glass are used in order to reduce its total solar energy transmittance to about 20% as much as possible. Although the visible light transmittance and visible light reflectance thereof meet the use requirements, and its total solar energy transmittance is also close to 20%, its mirror index is greater than 15, and the mirror reflection is too strong to meet the use demand of canceling the shade screens.

The visible light transmittance, mirror index and total solar energy transmittance of the laminated glass for a vehicle provided in Comparative Example 3 all meet the use requirements, but its visible light reflectance is greater than 8%, and cannot meet the use demand of canceling the shade screens.

### Examples 4 to 6 and Comparative Examples 4 to 6

### Example 4

This example provides laminated glass for a vehicle, and the schematic diagram of the structure thereof is shown in Fig. 1. It can be seen from Fig. 1 that the laminated glass for a vehicle comprises an outer glass pane 1, an inner glass pane 5, and an intermediate film 4, wherein the outer glass pane has a first surface 11 facing the outside of the vehicle and a second surface 12 facing the inside of the vehicle; the inner glass pane 5 has a third surface 51 facing the outside of the vehicle and a fourth surface 52 facing the inside of the vehicle; the intermediate film 4 bonds the outer glass pane 1 and the inner glass pane 5; an infrared reflective coating 3 is provided on the second surface 12 of the outer glass pane 1; and a low-emissivity coating 6 is provided on the fourth surface 52 of the inner glass pane 5.

An edge region of the second surface 12 of the outer glass pane 1 is covered with a first dark masking layer 2, an edge region of the fourth surface 52 of the inner glass pane 5 is covered with a second dark masking layer 7, and the width of the second dark masking layer 7 is greater than the width of the first dark masking layer 2; the material of the first dark masking layer 2 and the second dark masking layer 7 is a black ceramic ink. The first dark masking layer 2 can be directly printed on the second surface 12 by a process such as screen printing, or directly printed on the infrared reflective coating 3. The second dark masking layer 7 can be directly printed on the fourth surface 52 by a process such as screen printing, or directly printed on the low-emissivity coating 6.

In this example, the outer glass pane 1 is transparent glass having a thickness of 2.1 mm and a visible light transmittance of 88%; the inner glass pane 5 is transparent glass having a thickness of 2.1 mm and a visible light transmittance of 88%; and the intermediate film 4 is gray PVB having a visible light transmittance of 8%.

The infrared reflective coating 3 is triple silver infrared reflective coating, and specifically includes transparent glass/SiO₂ (13 nm)/ZnSnOx (26.8 nm)/AZO (15.2 nm)/Ag (10.7 nm)/AZO (8.2 nm)/TiO₂ (12.6 nm)/ZnSnOx (55.3 nm)/AZO (6.2 nm)/Ag(13.2 nm)/AZO (6 nm)/ZnSnOx (56.3 nm)/AZO (7 nm)/Ag (12.5 nm)/AZO (6.5 nm)/TiO₂ (14.9 nm)/ZnSnOx (19 nm)/Si₃N₄ (11 nm), where Ag is the metal layer and the others are the first medium layers.

The low-emissivity coating 6 includes a visible light blocking layer, and specifically includes transparent glass/Si₃N₄ (5 nm)/ITO (160 nm)/NiCr (4 nm)/Si₃N₄ (23 nm)/SiO₂ (60 nm)/Si₃N₄ (5 nm), where ITO is the transparent conductive oxide layer, NiCr is the visible light blocking layer, and the others are the second medium layers.

### Example 5

This example provides laminated glass for a vehicle, which is different from the laminated glass for a vehicle provided in Example 4 in only that:
The inner glass pane 5 is green glass having a thickness of 2.1 mm and a visible light transmittance of 82%.

### Example 6

This example provides laminated glass for a vehicle, which is different from the laminated glass for a vehicle provided in Example 4 in only that:
the intermediate film 4 is gray PVB having a visible light transmittance of 5%.

### Comparative Example 4

This comparative example provides laminated glass for a vehicle, which is different from the laminated glass for a vehicle provided in Example 4 in only that:
the intermediate film 4 is gray PVB having a visible light transmittance of 2%;
the low-emissivity coating 6 does not includes a visible light blocking layer, and specifically includes transparent glass/Si₃N₄ (5 nm)/ITO (118 nm)/Si₃N₄ (8 nm)/SiO₂ (180 nm), where ITO is the transparent conductive oxide layer, and the others are the second medium layers.

### Comparative Example 5

This example provides laminated glass for a vehicle, which is different from the laminated glass for a vehicle provided in Example 4 in only that:
The inner glass pane 5 is green glass having a thickness of 2.1 mm and a visible light transmittance of 82%; the intermediate film 4 is gray PVB having a visible light transmittance of 2%;
the low-emissivity coating 6 does not includes a visible light blocking layer, and specifically includes transparent glass/Si₃N₄ (5 nm)/ITO (118 nm)/Si₃N₄ (8 nm)/SiO₂ (180 nm), where ITO is the transparent conductive oxide layer, and the others are the second medium layers.

### Comparative Example 6

This example provides laminated glass for a vehicle, which is different from the laminated glass for a vehicle provided in Example 4 in only that:
The inner glass pane 5 is gray glass having a thickness of 2.1 mm and a visible light transmittance of 40%; the intermediate film 4 is gray PVB having a visible light transmittance of 2%.

### Performance Testing Example 2

The laminated glass for a vehicle provided in Examples 4 to 6 and the laminated glass for a vehicle provided in Comparative Examples 4 to 6 were obtained according to a process for producing vehicle glass, and then subjected to tests such as visible light transmittance (TL), visible light reflectance (RL), and total solar energy transmittance (TTS) respectively, and the mirror index (α) was calculated. The relevant testing results and calculation results are shown in Table 2.

Visible light transmittance (TL): visible light transmittance in the wavelength range of 380 nm to 780 nm of the laminated glass for a vehicle as measured and calculated according to ISO9050.

Visible light reflectance (RL): visible light reflectance in the wavelength range of 380 nm to 780 nm of the laminated glass for a vehicle as measured and calculated from the inside of the vehicle according to ISO9050.

Total solar energy transmittance (TTS): total solar energy transmittance in the wavelength range of 300 nm to 2500 nm of the laminated glass for a vehicle as measured and calculated according to ISO9050.

Mirror index (α): calculated according to the equation α=RL/TL².

**Table 2: Testing results and calculation results of Examples 4 to 6 and Comparative Examples 4 to 6**

| | Visible light transmittance TL | Visible light reflectance RL | Mirror index α | Total solar energy transmittance TTS |
|---|---|---|---|---|
| Example 4 | 5.06% | 1.43% | 5.59 | 12.62% |
| Example 5 | 4.64% | 1.09% | 5.06 | 12.33% |
| Example 6 | 3.08% | 0.94% | 9.91 | 11.92% |
| Comparative Example 4 | 1.90% | 4.25% | 118 | 11.31% |

| | | | | |
|---|---|---|---|---|
| Comparative Example 5 | 1.50% | 3.53% | 157 | 10.86% |
| Comparative Example 6 | 0.53% | 1.08% | 384 | 10.51% |

It can be seen from Table 2 above that the laminated glass for a vehicle provided in Examples 4 to 6 of the disclosure has a visible light transmittance TL of 0.5% to 6%, a visible light reflectance of ≤2%, a mirror index of 3 to 10, and a total solar energy transmittance of ≤13%. It shows that as compared with the laminated glass for a vehicle provided in Comparative Examples 4 to 6, when the laminated glass for a vehicle provided in Examples 4 to 6 is used as sunroof glass of the vehicle, it is possible to meet the use demand of canceling shade screens, and it can reduce or even eliminate obvious reflections of passengers and objects in the vehicle on the sunroof glass due to mirror reflection, avoid visual interference to passengers, especially rear-seat passengers, effectively improve the mirror reflection effect of the interior of the vehicle, enhance user experience and protect passenger privacy.

The visible light transmittance, visible light reflectance and total solar energy transmittance of the laminated glass for a vehicle provided in Comparative Examples 4 to 6 meet the use requirement, but when the visible light transmittance TL is reduced to TL≤2%, if the visible light reflectance RL is not further reduced to a lower level, the mirror index thereof is much greater than 15, or even greater than 100, and the mirror reflection is too strong to meet the use demand of canceling the shade screens. In order to allow it to have a mirror index of less than or equal to 15, thereby reducing the mirror reflection to meet the use demand of canceling the shade screens, it is necessary to further reduce the visible light reflectance RL to RL≤0.6%, when the visible light transmittance is reduced to TL≤2%.

The inner glass pane 5 used in Examples 1, 3, 4, 5 and 6 of the disclosure is transparent glass or green glass having a visible light transmittance of ≥80%, and the low-emissivity coating 6 further comprises at least one visible light blocking layer in direct contact with the transparent conductive oxide layer therein.

The inner glass pane 5 provided with the low-emissivity coating 6 in Examples 1, 3, 4, 5 and 6 is selected for performance testing, and the relevant performance testing results are shown in Table 3.

Visible light transmittance (TLᵢₙₙₑᵣ): visible light transmittance in the wavelength range of 380 nm to 780 nm of the inner glass pane 5 provided with the low-emissivity coating 6 as measured and calculated according to ISO9050.

Visible light reflectance (RLᵢₙₙₑᵣ): visible light reflectance in the wavelength range of 380 nm to 780 nm of the inner glass pane 5 provided with the low-emissivity coating 6 as measured and calculated from the side close to the low-emissivity coating 6 according to ISO9050.

Total solar energy transmittance (TTSᵢₙₙₑᵣ): total solar energy transmittance in the wavelength range of 300 nm to 2500 nm of the inner glass pane 5 provided with the low-emissivity coating 6 as measured and calculated according to ISO9050.

Mirror index (α1): calculated according to the equation α1=RLᵢₙₙₑᵣ/TLᵢₙₙₑᵣ².

Emissivity: measured from the side close to the low-emissivity coating 6 using a Fourier transform infrared spectrometer and calculated and calibrated according to standard EN12898.

Surface resistance: measured using a surface resistance tester.

Reflection color: measured from the side close to the low-emissivity coating 6 at an incident angle of 65° with D65 light source and a viewing angle of 10°, and calculated according to the CIE Lab color model, where the a value represents the value of greenness to redness, and the b value represents the value of blueness to yellowness.

**Table 3: Performance testing results of inner glass pane with low-emissivity coating in Examples 1 and 3 to 6**

| | | Examples 1, 3, 4 and 6 | Example 5 |
|---|---|---|---|
| Inner glass pane | | Transparent glass | Green glass |
| Low-emissivity coating | | Inclusion of visible light blocking layer | Inclusion of visible light blocking layer |
| Visible light transmittance (TLᵢₙₙₑᵣ) | | 65.95% | 58.38% |
| Visible light reflectance (RLᵢₙₙₑᵣ) | | 3.03% | 2.69% |
| Mirror index (α1) | | 0.07 | 0.08 |
| Total solar energy transmittance (TTSᵢₙₙₑᵣ) | | 64.70% | 50.78% |
| Emissivity | | 0.22 | 0.22 |
| Surface resistance | | 22 ohm/m² | 22 ohm/m² |
| Reflection color (Lab) | a value | 0.43 | -2.89 |
| | b value | 3.5 | 4.76 |

It can be seen from Table 3 above that in Examples of the disclosure, the inner glass pane 5 provided with the low-emissivity coating 6 has a transmittance of 50% to 70%, a reflectance of ≤4%, a mirror index of ≤0.1, an emissivity of ≤0.25, and a surface resistance of ≤23 ohm/m², and the reflection color of the inner glass pane 5 provided with the low-emissivity coating 6 as measured from the side close to the low-emissivity coating 6 is -10≤a≤2 and -5≤b≤5 according to the Lab. It can also be seen from Table 1 and Table 2 that the addition of at least one visible light blocking layer in the low-emissivity coating 6 can further improve the visible light transmittance, visible light reflectance, mirror index, total solar energy transmittance and the like, and even it may be unnecessary to use an intermediate film 4 or gray glass with lower visible light transmittance while achieving an equivalent level of visible light transmittance, visible light reflectance and total solar energy transmittance, which can greatly reduce production costs and production difficulties, prevent the mirror index from being much larger than 15, and better meet the use demand of canceling the shade screens.

The above description is only specific examples of the disclosure, and cannot limit the implementable scope of the disclosure, so the replacement with its equivalent component, or the equivalent changes and modifications made according to the protection scope of the present patent for invention, should still fall within the scope of this patent. In addition, a technical feature and another technical feature, a technical feature and a technical invention, and a technical invention and another technical invention in the disclosure can be used in any arbitrary combination.

## Claims

1. Laminated glass for a vehicle, comprising an outer glass pane, an inner glass pane, and an intermediate film, wherein the outer glass pane has a first surface facing the outside of the vehicle and a second surface facing the inside of the vehicle, the inner glass pane has a third surface facing the outside of the vehicle and a fourth surface facing the inside of the vehicle, the intermediate film bonds the second surface and the third surface, an infrared reflective coating is provided between the outer glass pane and the inner glass pane, and a low-emissivity coating is provided on the fourth surface;
wherein the laminated glass for a vehicle has a mirror index α of less than or equal to 15, the mirror index α is calculated according to the equation α=RL/TL², where RL is the visible light reflectance of the laminated glass for a vehicle measured from the inside of the vehicle, and TL is the visible light transmittance of the laminated glass for a vehicle.

2. The laminated glass for a vehicle according to claim 1, wherein the laminated glass for a vehicle has a mirror index α of 3 to 10.

3. The laminated glass for a vehicle according to claim 1, wherein an edge region of the second surface is covered with a first dark masking layer, and/or an edge region of the third surface or the fourth surface is covered with a second dark masking layer; the width of the second dark masking layer is greater than the width of the first dark masking layer.

4. The laminated glass for a vehicle according to claim 1, wherein the outer glass pane is transparent glass having a visible light transmittance of greater than or equal to 80% and a thickness of 1.8 mm to 4.2 mm.

5. The laminated glass for a vehicle according to claim 1, wherein the inner glass pane is transparent glass or green glass having a visible light transmittance of greater than or equal to 80% and a thickness of 0.7 mm to 2.1 mm.

6. The laminated glass for a vehicle according to claim 5, wherein the inner glass pane provided with the low-emissivity coating has a visible light transmittance of 50% to 70%.

7. The laminated glass for a vehicle according to claim 1, Wherein the inner glass pane provided with the low-emissivity coating has a mirror index α1 of less than or equal to 0.1, the mirror index α1 is calculated according to the equation α1=RLᵢₙₙₑᵣ/TLᵢₙₙₑᵣ², where RLᵢₙₙₑᵣ is the visible light reflectance of the inner glass pane provided with the low-emissivity coating measured from the side close to the low-emissivity coating, and TLᵢₙₙₑᵣ is the visible light transmittance of the inner glass pane provided with the low-emissivity coating.

8. The laminated glass for a vehicle according to claim 1, wherein the intermediate film has a visible light transmittance of 1% to 20%.

9. The laminated glass for a vehicle according to claim 8, wherein the intermediate film has a visible light transmittance of 2% to 10%.

10. The laminated glass for a vehicle according to claim 8, wherein the intermediate film is a colored thermoplastic polymer film comprising PVB, EVA, SGP or PU.

11. The laminated glass for a vehicle according to claim 1, wherein the infrared reflective coating comprises at least one metal layer and at least two first medium layers, and each metal layer is located between two adjacent first medium layers.

12. The laminated glass for a vehicle according to claim 1, wherein the low-emissivity coating comprises at least one transparent conductive oxide layer and at least two second medium layers, and each transparent conductive oxide layer is located between two adjacent second medium layers.

13. The laminated glass for a vehicle according to claim 12, wherein the low-emissivity coating further comprises at least one visible light blocking layer, and the visible light blocking layer is in direct contact with the transparent conductive oxide layer.

14. The laminated glass for a vehicle according to claim 1, wherein the low-emissivity coating has an emissivity of less than or equal to 0.25 and a surface resistance of less than or equal to 23 ohm/m², and the reflection color of the inner glass pane provided with the low-emissivity coating is -10≤a≤ 2 and -5≤b≤ 5 according to Lab, as measured from the side close to the low-emissivity coating.

15. The laminated glass for a vehicle according to any of claims 1 to 14, wherein the visible light transmittance TL of the laminated glass for a vehicle is 0.5% to 10%, the visible light reflectance RL of the laminated glass for a vehicle is less than or equal to 6% as measured from the inside of the vehicle, and the total solar energy transmittance of the laminated glass for a vehicle is less than or equal to 20%.

16. The laminated glass for a vehicle according to claim 15, wherein the visible light reflectance RL of the laminated glass for a vehicle is less than or equal to 4% as measured from the inside of the vehicle.

17. Use of the laminated glass for a vehicle according to any of claims 1 to 16 as sunroof glass, side window glass or rear windshield glass of a vehicle.
